(19) Europäisches Patentamt
European Patent Office
Office européen des brevets

(11) EP 0 870 776 A2

(12) **DEMANDE DE BREVET EUROPEEN**

(43) Date de publication:
**14.10.1998 Bulletin 1998/42**

(51) Int Cl.[6]: **C08F 4/46**, C08F 20/12

(21) Numéro de dépôt: **98400749.2**

(22) Date de dépôt: **31.03.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **10.04.1997 FR 9704469**

(71) Demandeur: **ELF ATOCHEM S.A.**
**92800 Puteaux, Hauts-de-Seine (FR)**

(72) Inventeurs:
- **Marchal, Jérôme**
  **33000 Bordeaux (FR)**
- **Gnanou, Yves**
  **33400 Talence (FR)**
- **Fontanille, Michel**
  **33400 Talence (FR)**

(74) Mandataire: **Luziau, Nelly**
**ELF ATOCHEM S.A.,**
**Département Propriété Industrielle,**
**4-8, Cours Michelet,**
**La Défense 10 - Cedex 42**
**92091 Paris-La-Défense (FR)**

(54) **Système d'amorçage comprenant un ligand aminoalcoolate pour la (co)polymérisation anionique de monomères (méth)acryliques, et procédé l'utilisant**

(57) Le système d'amorçage comprend au moins un amorceur et au moins un aminoalcoolate de formule :

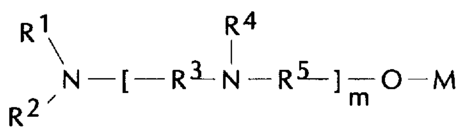

(I)

dans laquelle $R^1$, $R^2$ et $R^4$ représentent, chacun, indépendamment, un radical alkyle, linéaire ou ramifié, contenant de 1 à 8 atomes de carbone ou un radical arylalkyle, alkyl aryle ou un radical aryle ; $R^3$ et $R^5$ représentent, chacun, indépendamment, un radical alkylène, linéaire ou ramifié, contenant de 2 à 8 atomes de carbone non substitué ou substitué par un radical alkyle en $C_1$-$C_8$ ou aryle ou un radical arylalkylène ou un radical arylène ; M désigne un métal alcalin et m est égal à 0 ou à un nombre entier de 1 à 6.

Application à la préparation de (co)polymères (méth)acryliques (homopolymères, copolymères séquencés ou statistiques).

EP 0 870 776 A2

## Description

La présente invention concerne un système d'amorçage pour la polymérisation anionique de monomères (méth) acryliques et également de comonomères à insaturation(s) éthylénique(s) ; ce nouveau système d'amorçage permet un bon contrôle de la polymérisation anionique de ces monomères, en particulier à haute température.

La polymérisation anionique de monomères (méth)acryliques est souvent compliquée par les réactions secondaires des monomères à la fois avec l'amorceur et avec les extrémités de chaînes anioniques en croissance, et par les réactions de terminaison et de transfert de chaîne. Cependant, ce type de polymérisation est intéressant par le fait que l'on peut obtenir des polymères possédant une structure bien définie si elle peut être effectuée sous conditions contrôlées avec soin, nécessitant souvent l'utilisation de températures très basses de polymérisation pour minimiser ou éliminer les réactions de terminaison et de transfert de chaîne.

Des recherches ont été entreprises pour mieux contrôler la polymérisation des monomères (méth)acryliques et éviter ainsi les réactions secondaires.

Dans la demande de brevet européen EP-A-0524054, est décrite la polymérisation anionique de (méth)acrylates d'alkyle à l'aide d'un système d'amorçage comprenant un amorceur monofonctionnel ou bifonctionnel et un ligand consistant en un alcoxyalcoolate de métal alcalin.

Avec ce procédé, la polymérisation est bien contrôlée, mais surtout à basse température.

On recherche toujours un système d'amorçage qui permet une polymérisation anionique bien contrôlée et réalisable dans des conditions plus facilement industrialisables, notamment à une température plus élevée.

On cherche, en particulier, à préparer à haute température, du poly(méthacrylate de méthyle) comprenant un taux en triades syndiotactiques supérieur à celui pouvant être obtenu en polymérisation radicalaire classique, à la même température (par exemple, le taux de triades syndiotactiques est d'environ 50 % à 60 % en polymérisation radicalaire).

La présente invention a donc d'abord pour objet un système d'amorçage pour la polymérisation anionique de monomères (méth)acryliques et, éventuellement, de monomères à insaturation(s) éthylénique(s) copolymérisables avec ces monomères (méth)acryliques comprenant :

(1) au moins un amorceur et
(2) au moins un aminoalcoolate de métal alcalin de formule (I) comme ligand :

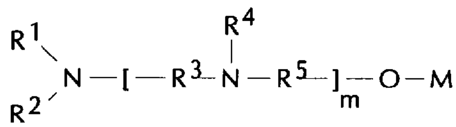 (I)

dans laquelle :

- $R^1$, $R^2$ et $R^4$ représentent, chacun, indépendamment, un radical alkyle, linéaire ou ramifié, contenant de 1 à 8 atomes de carbone ou un radical arylalkyle, alkylaryle dans lesquels les groupes alkyle ont de 1 à 8 atomes de carbone ou un radical aryle;
- $R^3$ et $R^5$ représentent, chacun, indépendamment, un radical alkylène, linéaire ou ramifié, contenant de 2 à 8 atomes de carbone, non substitué ou substitué par un radical alkyle en $C_1$-$C_8$ ou un radical aryle, ou un radical arylalkylène ou un radical arylène;
- M désigne un métal alcalin et
- m est égal à 0 ou à un nombre entier de 1 à 6.

Dans la formule (I) ci-dessus, $R^1$, $R^2$ et $R^4$ peuvent représenter, chacun, indépendamment, un radical méthyle, éthyle, propyle, butyle, pentyle, hexyle, benzyle ou phényle et de préférence, méthyle ; $R^3$ et $R^5$ peuvent représenter, chacun, indépendamment un radical éthylène, propylène, butylène ou isobutylène, et, de préférence, éthylène ; M représente de préférence le lithium, et m est égal de préférence, à zéro ou 1.

Les aminoalcoolates (2) sont des composés connus, qui sont préparés, par exemple, par réaction d'un composé (II) :

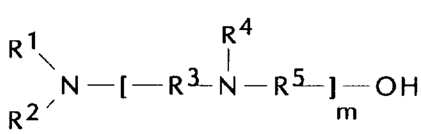 (II)

avec toute base dont le pKa est supérieur au pKa du couple alcoolate (I) / alcool (II). Ainsi, les aminoalcoolates de lithium peuvent être préparés par réaction avec un composé organométallique de lithium ou du lithium métallique en solvant polaire ou apolaire.

L'amorceur (1) du système d'amorçage selon l'invention peut être tout amorceur mono- ou di-fonctionnel connu pour la polymérisation anionique.

L'amorceur monofonctionnel peut être choisi notamment parmi les composés de formule (III) :

$$(R^6)_p\text{-M'} \qquad \text{(III)}$$

dans laquelle :

- $R^6$ désigne un radical alkyle à chaîne droite ou ramifiée, contenant 2 à 8 atomes de carbone ; ou un radical aryle à un ou plusieurs cycles, éventuellement substitué ; ou un radical alcényle en $C_2$-$C_6$ substitué par un groupe aryle ou alkylaryle ; ou un radical alkyle, linéaire ou ramifié, contenant 1 à 8 atomes de carbone, substitué par au moins un groupe phényle ou bien un radical alkylaryle dans lequel le groupe alkyle a de 1 à 8 atomes de carbone ;
- M' désigne un métal alcalin ou alcalino-terreux, la valence p étant respectivement de 1 ou 2 ;

L' amorceur monofonctionnel peut aussi être un $\alpha$-lithioisobutyrate et des amidures.

Des amorceurs monofonctionnels sont, par exemple, le sec.-butyllithium, le n-butyllithium, le fluorényllithium, l'alphaméthylstyryllithium, le 1,1-diphénylhexyllithium, le diphénylméthyl-lithium ou -sodium ou -potassium et le 1,1-diphényl-3-méthylpentyllithium.

Les amorceurs difonctionnels peuvent être de formule (IV) :

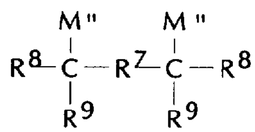

(IV)

dans laquelle :

- M" est un métal alcalin ; et
- $R^7$ représente un radical organique divalent, aliphatique, cycloaliphatique, aromatique ou comportant au moins un groupement cycloaliphatique ou aromatique, $R^7$ pouvant comporter des substituants ; et
- $R^8$ et $R^9$ représentent, chacun, indépendamment, un radical organique monovalent, aliphatique, cycloaliphatique, aromatique ou comportant au moins un groupement cycloaliphatique ou aromatique, $R^8$ et $R^9$ pouvant comporter des substituants.

L'amorceur difonctionnel peut être choisi notamment parmi les composés tels que le 1,1,4,4-tétraphényl-1,4-dilithio-butane, le 1,1,4,4-tétraphényl-1,4-disodiobutane.

On peut aussi utiliser les précurseurs d'amorceurs difonctionnels bien connus, comme le naphtalène lithium, le naphtalène sodium, le naphtalène potassium et leurs homologues.

On peut aussi utiliser le produit de réaction de deux équivalents d'amorceur organomonolithié (tel que le ter-butyllithium) sur le 1,3-diisopropényl-benzène.

Le rapport molaire de l'aminoalcoolate de métal alcalin (2) à l'amorceur (1) dans le système d'amorçage selon l'invention peut varier dans des limites très larges. La quantité d'aminoalcoolate (2) dépend de l'amorceur (1 ) choisi et du ou des monomères à polymériser. Le rapport molaire aminoalcoolate/amorceur, selon l'invention est compris entre 1 et 200, étant de préférence compris entre 5 et 100, particulièrement supérieur à 10.

La présente invention porte également sur un procédé de polymérisation anionique de monomères (méth)acryliques et éventuellement de monomères à insaturation(s) éthylénique(s) copolymérisables avec les monomères (méth) acryliques, caractérisé par le fait qu'on conduit la polymérisation en présence d'un système d'amorçage tel que défini ci-dessus.

La température de polymérisation peut varier entre -100°C et +100°C, de préférence entre -10°C et +90°C et, tout particulièrement, elle est inférieure ou égale à + 70°C.

La polymérisation, réalisée en présence du système d'amorçage selon l'invention, a lieu, de préférence, en l'absence d'humidité et d'oxygène, et, en présence d'au moins un solvant non protique, de préférence apolaire ou majoritairement apolaire. Le solvant peut être choisi, de préférence, parmi le benzène, le toluène, l'éthylbenzène, le tétrahydrofuranne, le diglyme, le tétraglyme, l'orthoterphényle, le biphényle, la décaline, la tétraline ou leurs mélanges ; on utilise avantageusement le toluène ou l'éthylbenzène. On peut aussi utiliser un mélange toluène-tétrahydrofuranne ou éthylbenzène-tétrahydrofuranne pouvant contenir jusqu'à 10% en volume de tétrahydrofuranne.

Le système d'amorçage selon l'invention permet une conversion totale des monomères en une durée inférieure, généralement très inférieure, à 30 minutes, cette durée étant dépendante de la température. Dans le cas de la polymérisation des acrylates, cette durée peut être très inférieure à une seconde.

Le polymérisation selon l'invention est possible en réacteurs de type batch ou tubulaire, mais elle n'est pas limitée à ceux-ci.

Elle peut avoir lieu, en continu, comme décrit dans la demande de brevet EP-A-749987 et, dans ce cas, le ou les monomères à polymériser et le système d'amorçage sont d'abord mélangés dans un micromélangeur (par exemple micromélangeur de type cyclone ou à jets tangentiels, du type à jets d'impacts), puis le mélange est injecté dans le réacteur de (co)polymérisation. La durée du séjour du ou des monomère(s) et du système d'amorçage dans le micromélangeur est inférieure au temps de (co)polymérisation.

La polymérisation peut avoir lieu dans des conditions adiabatiques. Ceci est intéressant puisqu'il n'y a pas à fournir d'énergie au cours de la polymérisation.

Par le procédé selon l'invention, on peut former, à températures élevées, des homopolymères, en particulier du poly(méthacrylate) de méthyle ayant un taux de triades d'au moins 60 %, des copolymères statistiques ou des copolymères séquencés ainsi que de polymères en étoile comprenant des branches formées de (co)polymères, séquencés ou statistiques .

Les monomères que l'on peut (co)polymériser par le procédé de l'invention sont les monomères (méth)acryliques, et les monomères à insaturation(s) éthylénique(s) copolymérisables avec ces monomères (méth)acryliques. Ces derniers sont notamment choisis parmi les monomères vinylaromatiques, éventuellement substitués par exemple par des halogènes , les monomères diéniques, les monomères vinylidéniques, les monomères oléfiniques et les vinyl-2 et vinyl-4 pyridine, vinylsilanes, vinylaldehydes, vinylcétones, vinylsulfoxydes et les alkylcyanoacrylates. On peut aussi utiliser des monomères hétérocycliques.

Le terme "monomère (méth)acrylique", tel qu'employé ci-dessus, signifie un monomère choisi parmi les (méth) acrylates des formules respectivement :

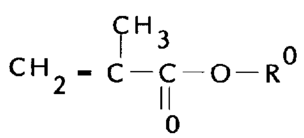
et
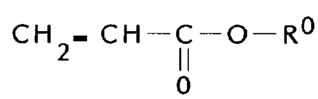

dans lesquelles $R^0$ est choisi parmi les radicaux alkyle en $C_1$-$C_{18}$, linéaires ou ramifiés, primaires, secondaires ou tertiaires, cycloalkyle en $C_5$-$C_{18}$, alcoxy-alkyle et alkylthio-alkyle dans lesquels le groupe alkyle, linéaire ou ramifié, a de 1 à 8 atomes de carbone, aryle et arylalkyle, ces radicaux étant éventuellement substitués par au moins un atome de fluor et/ou au moins un groupe hydroxyle après protection de ce groupe hydroxyle ; les (méth)acrylates de glycidyle, de norbornyle, d'isobornyle, les mono- et di-(alkyl en $C_1$-$C_{18}$)-(méth)acrylamides.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le tert.-butyl-3-styrène et le vinyl-1-naphtalène.

Par monomère diénique, on entend un diène choisi parmi les diènes linéaires ou cycliques, conjugués ou nonconjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les

2-alkyl-2,5-norbornadiènes, le 5-éthylène-2-norbornène, le 5-(2-propényl)-2-norbornène, le 5-(5-hexényl)-2-norbornène.

Comme monomères oléfiniques, on peut citer l'éthylène.

Les exemples suivants illustrent la présente invention sans toutefois en limiter la portée.

Dans les exemples, on a utilisé les abréviations suivantes :

- MMA et PMMA = méthacrylate de méthyle et poly(méthacrylate de méthyle) ;
- THF = tétrahydrofuranne
- $[A]_0$ = concentration initiale de l'amorceur
- [L] = concentration du ligand
- $[M]_0$ = concentration initiale du monomère
- DPE = 1,1-diphényléthylène
- BuLi = n-butyllithium
- DPHLi = 1,1-diphénylhexyllithium
- $M_0$ = masse molaire du monomère
- $\overline{Mn}_{théorique} = M_0 \times \frac{[M]_0}{[A]_0} \times$ Rendement
- $Ip = \overline{Mw}/\overline{Mn}$
- $r = [L]/[A]_0$.

Les aminoalcoolates utilisés sont le 2-[N-(2-diméthylaminoéthyl)-N-méthylamino] éthylate de lithium (Ia) :

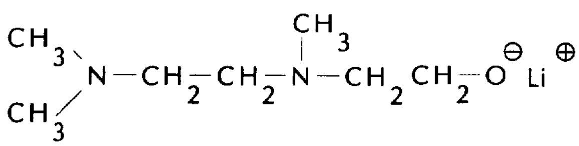
(Ia)

et le 2-(diméthylamino)éthylate de lithium (Ib) :

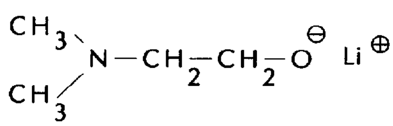
(Ib)

Le mode opératoire général est le suivant :

On évite toute trace d'impuretés (humidité, oxygène, ...) dans le système; pour cela tous les réactifs ont été purifiés comme décrit ci-dessous, dégazés et maintenus sous azote pur.

Le méthacrylate de méthyle (MMA) est tout d'abord séché sur hydrure de calcium ($CaH_2$), puis on ajoute une solution à 10 % de triéthylaluminium dans le toluène jusqu'à la persistance d'une couleur jaune clair. Le MMA est redistillé juste avant utilisation.

Le toluène et le THF ont été fractionnés, puis portés à reflux sur du potassium et introduits dans un ballon à fond rond relié à une canalisation sous vide. Après dégazage, le mélange a été agité avec 5 ppm de benzophénone sur un alliage sodium/potassium (1/3) jusqu'à ce que la solution devienne bleue, puis il a été distillé à nouveau juste avant utilisation.

L'amorceur est obtenu par réaction d'un équivalent du n-butyllithium (1,3 M en solution dans un mélange cyclohexane/hexane) avec un équivalent de DPE, dans le THF à -40°C (ou dans le toluène à + 30°C).

Les aminoalcoolates sont préparés in situ par réaction des alcools (distillés sur magnésium et conservés sous azote)

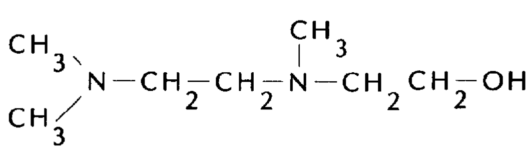
1a

ou

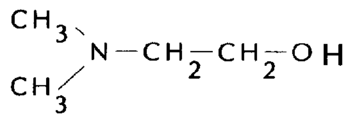 Ib

avec de l'amorceur.

Tous les réactifs sont stockés, sous azote, dans des burettes graduées. Les polymérisations sont réalisées dans des réacteurs en verre sous azote.

**Exemple 1:**

Dans un réacteur de 500 ml équipé d'un barreau aimanté, on introduit 100 ml de THF sous azote, puis on ajoute quelques gouttes d'amorceur DPH-Li jusqu'à ce qu'une couleur rouge apparaisse.

On ajoute alors 0,3 ml d'alcool (Ia) (1,85 x $10^{-3}$ mole); la couleur rouge disparaît instantanément. On obtient la déprotonation de l'alcool en ajoutant, goutte à goutte 4 ml de DPH-Li (4,6 x $10^{-4}$ mole/ml). Lorsque la couleur rouge apparaît à nouveau, le milieu réactionnel est thermostaté et on y ajoute 0,4 ml d'amorceur DPH-Li ($r = [L]/[A]_0 = 10$). On introduit, sous forte agitation, 5,1 ml de MMA fraîchement distillé. Après quelques minutes, on arrête la polymérisation par addition de 0,5 ml de méthanol. On récupère le polymère par précipitation dans le méthanol, puis on le sèche sous vide.

Les chromatographies d'exclusion stérique sont faites sur un appareil Varian équipé d'une double détection UV/RI et de colonnes de type TSK calibrées avec des étalons de polystyrène. Le THF est utilisé comme éluant.

La tacticité des polymères est déterminée par RMN$^1$H, réalisée sur un appareil Brucker AC200 (200 MHZ).

Les résultats sont indiqués au tableau 1.

**Tableau 1**

**Polymérisation anionique du MMA dans le THF avec le diphénylhexyllithium comme amorceur et le ligand (Ia)**

| Exemple | Temp. (°C) | r | Rendement (% en poids) | $\overline{Mn}_{théo}$ | $\overline{Mn}_{exp}$ | Ip | Tacticité mm | Tacticité mr | Tacticité rr |
|---|---|---|---|---|---|---|---|---|---|
| 1 | 10 | 10 | 100 | 25 800 | 24768 | 1,88 | 0,06 | 0,32 | 0,62 |
| 2 | 10 | 20 | " | 15 500 | 15190 | 1,86 | 0,03 | 0,35 | 0,62 |
| 3 | 20 | 20 | " | 23 500 | 22560 | 2,13 | 0,08 | 0,24 | 0,68 |
| 4 | 40 | 10 | 50 | 8 000 | 9680 | 2,80 | - | - | - |

rr = syndiotactique
mm = isotactique
mr = atactique
$\overline{Mn}$ en g/mole

**Exemples 2 à 4 :**

On opère comme à l'exemple 1, en modifiant les conditions opératoires comme indiqué au tableau 1.

A l'exemple 4, on note qu'en milieu polaire, avec un $r=[L]/[A]_o$ égal à 10, on commence à perdre le contrôle de la polymérisation seulement à partir de + 40°C.

**Exemples 5 à 11 :**

On opère comme à l'exemple 1, mais on utilise l'alcool 1b pour former in situ le ligand Ib.

Les conditions opératoires et les résultats sont donnés au tableau 2.

**Exemples 12 à 15 :**

On opère comme à l'exemple 1, mais on utilise du toluène au lieu du THF.

Les conditions opératoires et les résultats sont donnés au tableau 3.

**Exemples 16 à 22 :**

On opère comme aux exemples 5 à 11, mais on utilise, comme solvant, du toluène au lieu du THF.

Les résultats sont donnés au tableau 4.

On peut noter, après étude des résultats des tableaux 3 et 4 par rapport à ceux des tableaux 1 et 2, que la polymérisation en milieu apolaire est mieux contrôlée à haute température, même si les résultats obtenus en milieu polaire restent remarquables.

Au tableau 4, on peut remarquer que, dans les exemples 21 et 22, à haute température (90°C), on améliore le contrôle de la polymérisation en augmentant le rapport $r = [L]/[A]_0$.

**Exemples 23 à 27 :**

On opère comme à l'exemple 1, mais on utilise, comme solvant, un mélange de toluène et de THF (9/1 en volume).

Les conditions opératoires et les résultats sont indiqués au tableau 5.

## Tableau 2

**Polymérisation anionique du MMA dans le THF avec le diphénylhexyllithium comme amorceur et le ligand (Ib)**

| Exemple | Temp. (°C) | r | Rendement (% en poids) | $\overline{Mn}_{théo}$ | $\overline{Mn}_{exp}$ | Ip | Tacticité | | |
|---|---|---|---|---|---|---|---|---|---|
| | | | | | | | mm | mr | rr |
| 5 | -80 | 10 | 100 | 17 500 | 18200 | 1,29 | - | - | - |
| 6 | -20 | 10 | " | 12 500 | 13500 | 1,37 | - | - | - |
| 7 | -20 | 20 | " | 18 900 | 20601 | 1,40 | - | - | - |
| 8 | -10 | 10 | " | 12 800 | 13056 | 1,61 | 0,04 | 0,26 | 0,70 |
| 9 | 0 | 10 | " | 24 500 | 25480 | 1,53 | 0,06 | 0,25 | 0,69 |
| 10 | 0 | 20 | " | 15 600 | 16068 | 1,55 | 0,05 | 0,25 | 0,70 |
| 11 | 10 | 50 | 65 | 19 500 | 25935 | 1,98 | 0,09 | 0,20 | 0,71 |

rr = syndiotactique
mm = isotactique
mr = atactique
$\overline{Mn}$ en g/mole

**Tableau 3**

**Polymérisation anionique du MMA dans le toluène avec le diphénylhexyllithium comme amorceur et le ligand (Ia)**

| Exemple | Temp. (°C) | r | Rendement (% en poids) | $\overline{Mn}_{théo}$ | $\overline{Mn}_{exp}$ | Ip |
|---|---|---|---|---|---|---|
| 12 | -80 | 10 | 100 | 21 600 | 158 328 | 1,09 |
| 13 | 10 | 10 | " | 30 700 | 144 597 | 1,95 |
| 14 | 10 | 20 | " | 20 000 | 94 600 | 2,02 |
| 15 | 20 | 10 | " | 13 400 | 63 248 | 1,90 |

$\overline{Mn}$ en g/mole

**Tableau 4**

**Polymérisation anionique du MMA dans le toluène avec le diphénylhexylithium comme amorceur et le ligand (Ib)**

| Exemple | Temp. (°C) | r | Rendement (% en poids) | $\overline{Mn}_{théo}$ | $\overline{Mn}_{exp}$ | Ip | Tacticité | | |
|---|---|---|---|---|---|---|---|---|---|
| | | | | | | | mm | mr | rr |
| 16 | -80 | 10 | 100 | 10 400 | 19 968 | 1,80 | - | - | - |
| 17 | 60 | 100 | " | 39 300 | 37 335 | 2,14 | 0,07 | 0,24 | 0,69 |
| 18 | 70 | 100 | " | 31 000 | 29 760 | 2,25 | 0,07 | 0,22 | 0,70 |
| 19 | 70 | 200 | " | 20 000 | 19 200 | 2,19 | 0,10 | 0,11 | 0,70 |
| 20 | 80 | 100 | 80 | 16 000 | 21 440 | 2,23 | - | - | - |
| 21 | 90 | 10 | 70 | 14 000 | 20 580 | 3,61 | - | - | - |
| 22 | 90 | 100 | 75 | 15 000 | 20 550 | 1,81 | - | - | - |

$\overline{Mn}$ en g/mole

## Tableau 5

**Polymérisation anionique du MMA dans un mélange toluène/THF (9/1 en volume) avec le diphénylhexyllithium comme amorceur et le ligand (Ia)**

| Exemple | Temp. (°C) | r | Rendement (% en poids) | $\overline{Mn}_{théo}$ | $\overline{Mn}_{exp}$ | Ip | Tacticité | | |
|---|---|---|---|---|---|---|---|---|---|
| | | | | | | | mm | mr | rr |
| 23 | 30 | 10 | 100 | 27 600 | 26 772 | 1,71 | 0,11 | 0,29 | 0,60 |
| 24 | 40 | 10 | 100 | 32 000 | 32 960 | 1,78 | 0,10 | 0,29 | 0,61 |
| 25 | 50 | 10 | 50 | 10 000 | 13 100 | 2,42 | - | - | - |
| 26 | 50 | 25 | 55 | 11 000 | 14 080 | 2,48 | - | - | - |
| 27 | 50 | 50 | 55 | 11 000 | 14 300 | 2,44 | - | - | - |

**<u>Exemples 28 à 30</u> :**

On opère comme aux exemples 5 à 11, mais on utilise un mélange de toluène et de THF (9/1 en volume).

Les conditions opératoires et les résultats sont indiqués au tableau 6.

Comme le montrent les exemples, la présente invention permet, pour la première fois, la polymérisation anionique contrôlée du méthacrylate de méthyle à des températures aussi élevées que 70°C, en milieu apolaire, en présence d'un ligand d'un nouveau type associé à un amorceur classique.

## Tableau 6

**Polymérisation anionique du MMA dans un mélange toluène/THF (9/1 en volume) avec le diphénylhexyllithium comme amorceur et le ligand (Ib)**

| Exemple | Temp. (°C) | r | Rendement (% en poids) | $\overline{Mn}_{théo}$ | $\overline{Mn}_{exp}$ | Ip | Tacticité | | |
|---|---|---|---|---|---|---|---|---|---|
| | | | | | | | mm | mr | rr |
| 28 | 20 | 10 | 100 | 28 600 | 28 028 | 1,80 | 0,06 | 0,29 | 0,65 |
| 29 | 30 | 10 | " | 15 000 | 14 400 | 1,99 | 0,05 | 0,30 | 0,65 |
| 30 | 30 | 100 | " | 40 400 | 39 188 | 1,68 | 0,08 | 0,27 | 0,65 |

$\overline{Mn}$ en g/mole

**Revendications**

1. Système d'amorçage pour la (co)polymérisation anionique de monomères (méth)acryliques et éventuellement de comonomères à insaturation(s) éthylénique(s), comprenant :

   (1)au moins un amorceur et
   (2)au moins un aminoalcoolate de métal alcalin de formule (I) comme ligand :

(I) 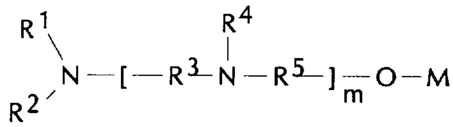

   dans laquelle :

   - $R^1$, $R^2$ et $R^4$ représentent, chacun, indépendamment un radical alkyle, linéaire ou ramifié, contenant de 1 à 8 atomes de carbone ou un radical arylalkyle, alkylaryle dans lesquels le groupe alkyle a de 1 à 6 atomes de carbone, ou un radical aryle;
   - $R^3$ et $R^5$ représentent, chacun, indépendamment un radical alkylène, linéaire ou ramifié, contenant de 2 à 8 atomes de carbone non substitué ou substitué par un radical alkyle en $C_1$-$C_8$ ou un radical aryle ou un radical arylalkylène ou un radical arylène;
   - M désigne un métal alcalin ; et
   - m est égal à 0 ou à un nombre entier de 1 à 6.

2. Système d'amorçage selon la revendication 1, caractérisé par le fait que, dans la formule (I), $R^1$, $R^2$ et $R^4$ représentent, chacun, indépendamment, un radical méthyle, éthyle, propyle, butyle, pentyle, hexyle, phényle ou benzyle, de préférence méthyle, $R^3$ et $R^5$ représentent, chacun, indépendamment, un radical éthylène, propylène, butylène ou isobutylène, de préférence éthylène, m est égal à 0 ou à un nombre entier de 1 à 6 et M représente le lithium.

3. Système d'amorçage selon l'une des revendications 1 et 2, caractérisé par le fait que le ou les amorceurs (1) sont choisis parmi les amorceurs monofonctionnels de formule (III) :

$$(R^6)_p\text{-M'} \qquad \text{(III)}$$

   dans laquelle :

   - $R^6$ désigne un radical alkyle à chaîne droite ou ramifiée, contenant 2 à 8 atomes de carbone ; ou un radical aryle à un ou plusieurs cycles, éventuellement substitué ; ou un radical alcényle en $C_2$-$C_6$ substitué par aryle ou alkylaryle ; ou un radical alkyle, linéaire ou ramifié, contenant 1 à 8 atomes de carbone, substitué par au moins un groupe phényle, ou bien un radical alkylaryle dans lequel le radical alkyle a de 1 à 8 atomes de carbone ;
   - M' désigne un métal alcalin ou alcalino-terreux, la valence p étant respectivement de 1 ou 2 ;

     et les amorceurs $\alpha$-lithioisobutyrates et amidures.

4. Système d'amorçage selon la revendication 3, caractérisé par le fait que les amorceurs monofonctionnels sont choisis parmi le sec.-butyllithium, le n-butyllithium, le fluorényllithium, l'alphaméthylstyryllithium, le 1,1-diphénylhexyllithium, le diphénylméthyllithium ou sodium ou potassium, et le 1,1-diphényl-3-méthylpentyllithium.

5. Système d'amorçage selon l'une des revendications 1 et 2 caractérisé en ce que le ou les amorceur(s) (1) sont choisis parmi les amorceurs difonctionnels de formule (IV) :

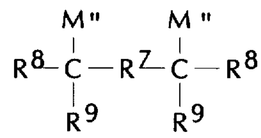 (IV)

dans laquelle :

- M" est un métal alcalin ; et
- $R^7$ représente un radical organique divalent, aliphatique, cycloaliphatique, aromatique ou comportant au moins un groupement cycloaliphatique ou aromatique, $R^7$ pouvant comporter des substituants ; et
- $R^8$ et $R^9$ représentent, chacun, indépendamment, un radical organique monovalent, aliphatique, cycloaliphatique, aromatique ou comportant au moins un groupement cycloaliphatique ou aromatique, $R^8$ et $R^9$ pouvant comporter des substituants.

**6.** Système d'amorçage selon la revendication 5, caractérisé par le fait que le ou les amorceurs difonctionnels sont choisis parmi le 1,1,4,4-tétraphényl-1,4-dilithio-butane et le 1,1 ,4,4-tétraphényl-1,4-disodiobutane.

**7.** Système d'amorçage selon l'une des revendications 1 et 2 caractérisé en ce que le ou les amorceur(s) difonctionnels (1) sont choisis parmi les précurseurs d'amorceurs difonctionnels, naphtalène lithium, naphtalène sodium et naphtalène potassium, ou bien le produit de réaction de deux équivalents d'amorceur organomonolithié sur le 1,3-diisopropénylbenzène.

**8.** Système d'amorçage selon l'une des revendications 1 à 7, caractérisé par le fait que le rapport molaire aminoalcoolate (2)/amorceur (1) est compris entre 1 et 200, de préférence, entre 5 et 100.

**9.** Procédé de (co)polymérisation par voie anionique de monomères (méth)acryliques et éventuellement de comonomères à insaturation(s) éthylénique(s), caractérisé par le fait qu'on conduit la polymérisation en présence d'un système d'amorçage tel que défini à l'une des revendications 1 à 8.

**10.** Procédé selon la revendication 9, caractérisé par le fait qu'il est conduit à une température entre -100°C à +100°C, de préférence à une température entre -10°C à + 90°C.

**11.** Procédé selon l'une des revendications 9 et 10, caractérisé par le fait qu'il est conduit dans au moins un solvant aprotique, polaire ou apolaire, de préférence apolaire ou majoritairement apolaire.

**12.** Procédé selon la revendication 11, caractérisé par le fait que le solvant est choisi parmi le benzène, le toluène, l'éthylbenzène, le tétrahydrofuranne, le diglyme, le tétraglyme, l'orthoterphényle, le biphényle, la décaline, la tétraline ou leurs mélanges, en particulier le toluène, l'éthylbenzène ou bien un mélange toluène-tétrahydrofuranne ou éthylbenzène-tétrahydrofuranne contenant jusqu'à 10% en volume de tétrahydrofuranne.

**13.** Procédé selon l'une des revendications 9 à 12, caractérisé par le fait qu'il est conduit pendant une durée inférieure à 30 minutes.

**14.** Procédé selon l'une des revendications 9 à 13, caractérisé par le fait que les monomères (méth)acryliques sont choisis parmi les (méth)acrylates des formules respectivement :

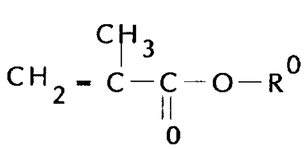 et 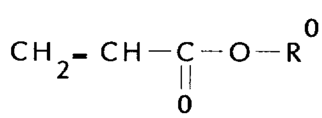

dans lesquelles $R^0$ est choisi parmi les radicaux alkyle en $C_1$-$C_{18}$, linéaires ou ramifiés, primaires, secondaires ou tertiaires, cycloalkyle en $C_5$-$C_{18}$, alcoxy-alkyle et alkylthio-alkyle dans lesquels le groupe alkyle linéaire ou ramifié a de 1 à 8 atomes de carbone, aryle et arylalkyle, éventuellement substitués par au moins un atome de fluor et/ou au moins un groupe hydroxyle après protection de ce groupe hydroxyle ; les (méth)acrylates de glycidyle, de norbornyle, d'isobornyle, les mono- et di-(alkyl en $C_1$-$C_{18}$)-(méth)acrylamides.

**15.** Procédé selon la revendication 14, caractérisé par le fait que les monomères méthacryliques sont choisis parmi les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle.

**16.** Procédé selon la revendication 14, caractérisé par le fait que les monomères acryliques sont choisis parmi les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

**17.** Procédé selon l'une des revendications 9 à 16, caractérisé par le fait que les monomères copolymérisables avec les monomères (méth)acryliques sont choisis parmi les monomères vinylaromatiques, les monomères diéniques, les monomères vinylidéniques, les monomères oléfiniques, les vinyl-2 et vinyl-4 pyridines, vinylsilanes, vinylaldéhydes, vinylcétones, vinylsulfoxydes, alkylcyanoacrylates et les monomères hétérocycliques.

**18.** Procédé selon l'une des revendications 9 à 13, caractérisé par le fait qu'on polymérise du méthacrylate de méthyle en présence d'un solvant apolaire ou majoritairement apolaire.

**19.** Procédé selon la revendication 18, caractérisé en ce que l'on obtient un poly(méth)acrylate de méthyle, ayant un taux de triades syndiotactiques d'au moins 60 %.